# DEMANDE DE BREVET EUROPEEN

(11) **EP 0 872 657 A1**
(43) Date de publication de la demande: **21.10.1998**
(21) Numéro de dépôt: 98400951.4
(22) Date de dépôt: 17.04.1998
(51) Int. Cl.: F16D 48/06

(54) **Procédé d'apprentissage du fonctionnement d'un embrayage piloté**

(30) Priorité: 18.04.1997 FR 9704817
(71) Demandeur: RENAULT, 92109 Boulogne-Billancourt (FR)
(72) Inventeur: Pouyau, Laurent, 92290 Chatenay Malabry (FR); Rivoiron, Sylvain, 95320 Saint-Leu-La-Forêt (FR); Sauzay, Mathieu, 92400 Courbevoie (FR)

(57) **Abrégé**

Procédé d'apprentissage du fonctionnement d'un embrayage piloté comportant une butée (4) déplacée axialement sur un arbre d'embrayage (6) par un actionneur placé sous le contrôle d'un calculateur, caractérisé en ce que :
- on immobilise le véhicule, moteur tournant au ralenti et embrayage ouvert, après avoir engagé un rapport de la transmission,
- on déplace l'actionneur (6) de sa position débrayée vers sa position embrayée en observant l'évolution du régime moteur de façon à repérer les positions de l'actionneur correspondant plusieurs valeurs de régime moteur préétablies, et
- on mesure le couple transmis dans chacune de ces positions.

## Description

La présente invention se rapporte à la commande automatique des embrayages disposés entre un moteur de véhicule et une boîte de vitesses mécanique.

Elle concerne une opération d'apprentissage effectuée avant la mise en service d'un embrayage commandé automatiquement, tel qu'un embrayage piloté.

Les embrayages pilotés sont généralement actionnés par l'intermédiaire d'un actionneur, par exemple un vérin, recevant une pression hydraulique de commande qui lui permet de repousser axialement sur l'arbre d'embrayage une butée de débrayage contre le centre d'un diaphragme. Ce déplacement s'effectue sous le contrôle d'un calculateur qui exploite notamment des informations relatives au rapport engagé, à la position de la pédale d'accélérateur, au levier de changement de vitesses, au régime du moteur, et à la vitesse du véhicule, les seules interventions directes du conducteur sur le système étant la prise en main et le déplacement du levier de changement de vitesses, ainsi que l'enfoncement de la pédale d'accélérateur.

Le réglage d'un calculateur d'embrayage piloté nécessite plusieurs opérations de mise au point, réalisées normalement une fois pour toutes en fin de chaîne de montage.

Parmi ces opérations, on peut citer l'apprentissage de différentes positions du capteur de vérin de débrayage, notamment en situation pied levé et pied à fond de l'accélérateur, l'apprentissage des positions du capteur de vitesse engagée sur chacun des rapports de la boîte, ou encore celui du point de début de passage du couple moteur lors de l'embrayage au démarrage, appelé «point de léchage» par les spécialistes.

En l'absence d'autres informations sur le comportement de l'embrayage, le calculateur ne peut pas garantir le démarrage instantané et progressif du véhicule.

On constate en effet des différences de comportement importantes entre des embrayages fabriqués dans des conditions identiques. Ces différences sont le résultat de dispersions mécaniques introduites lors de la réalisation des différents composants d'un embrayage, et lors de leur assemblage.

Les courbes traduisant l'évolution de l'effort à la butée au cours de la manoeuvre d'embrayage, montrent notamment que pour une même position de la butée, la valeur du couple transmis varie fortement d'un embrayage à l'autre.

Pour améliorer la progressivité des démarrages avec un embrayage piloté, il a déjà été proposé de déduire d'un point de fonctionnement particulier de l'embrayage, tel que le point de début de passage du couple, la loi de variation de l'effort à la butée sur l'ensemble de sa course.

En raison des dispersions mécaniques mentionnées ci-dessus, les courbes de fonctionnement obtenues avec ce type d'extrapolation sont trop éloignées du fonctionnement réel de chaque embrayage, pour être exploitables.

La présente invention vise à optimiser l'apprentissage du fonctionnement d'un embrayage piloté.

Elle propose d'immobiliser le véhicule, moteur tournant au ralenti et embrayage ouvert, après avoir engagé un rapport de la transmission, puis de déplacer l'actionneur de sa position débrayée vers sa position embrayée en observant l'évolution du régime moteur de façon à repérer les positions de l'actionneur correspondant à plusieurs valeurs de régime moteur préétablies, et à mesurer le couple transmis dans chacune de ces positions.

De préférence, les valeurs de régime moteur préétablies correspondent à des chutes de régime déterminées à partir du ralenti.

Conformément à l'invention, ces mesures sont exploitées pour déterminer des points de fonctionnement de l'embrayage définis par une position de l'actionneur, et par la valeur du couple transmis par l'embrayage dans cette position.

Ces points de fonctionnement permettent de tracer une courbe représentative de la progressivité de l'embrayage.

D'autres caractéristiques et avantages de l'invention apparaîtront clairement à la lecture de la description suivante d'un mode de réalisation particulier de celle-ci, en liaison avec les dessins annexés, sur lesquels :
- la figure 1 illustre le fonctionnement d'un embrayage piloté, et la mise en oeuvre du procédé d'apprentissage proposé,
- les figures 2 et 3 présentent des courbes d'évolution dans le temps du régime moteur et de la position de la butée d'embrayage, et
- la figure 4 reproduit une courbe de fonctionnement d'embrayage.

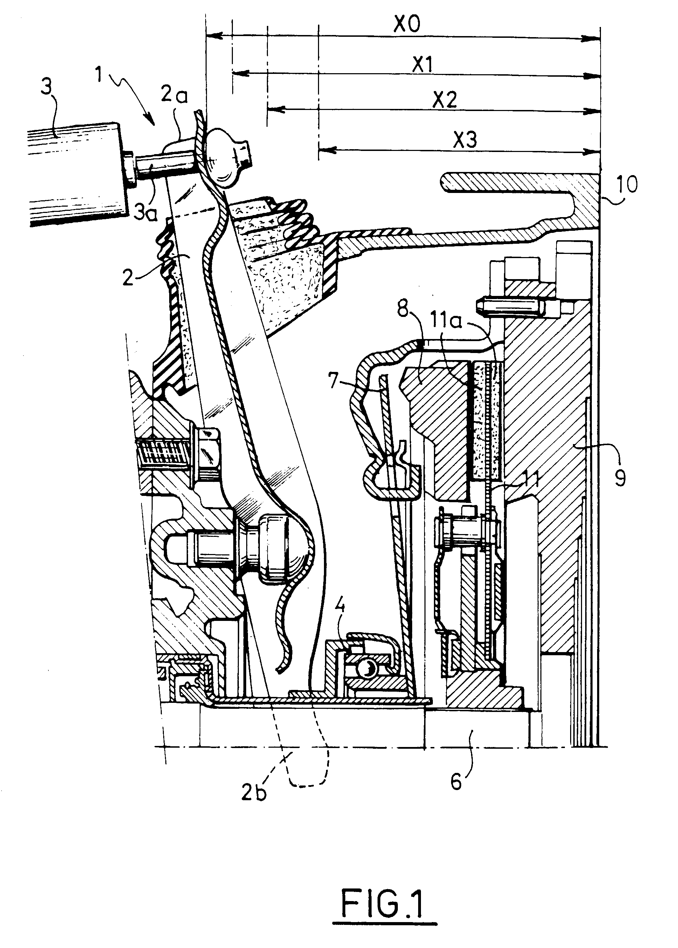

Le mécanisme d'embrayage 1 de type connu illustré par la figure 1, comporte une fourchette 2 dont l'extrémité supérieure 2a est poussée pour embrayer (vers la droite du schéma), par la tige 3a d'un actionneur, 3 tel qu'un vérin hydraulique, placé en fonctionnement normal sous le contrôle d'un calculateur d'embrayage non représenté. L'extrémité inférieure 2b de la fourchette 2 est en appui contre une butée de débrayage 4 déplaçable le long de l'arbre d'embrayage 6. De façon classique, la butée 4 se déplace sur l'arbre 6 sous l'action de la fourchette 2 à l'encontre de l'effort élastique du diaphragme 7, de sorte que la course de la butée est en relation directe avec celle de l'extrémité supérieure 2a de la fourchette.

En position débrayée, l'extrémité inférieure 2b de la fourchette 2 maintient la butée 4 contre le centre du diaphragme 7, de manière à écarter le plateau de serrage 8 de l'embrayage, du volant moteur 9, si bien que les garnitures de friction 11a du disque d'embrayage 11 sont dégagées de ces deux éléments, et qu'aucun couple ne transite par le mécanisme d'embrayage 1. L'extrémité supérieure 2a de la fourchette 2 se trouve alors à une distance xₒ d'un plan fixe passant par la face arrière du carter d'embrayage 10.

Cette distance diminue lors de l'embrayage, et fournit à chaque instant une image précise de la position de la butée 4, elle-même représentative de la position relative du plateau de serrage 8 et du volant moteur 9, qui détermine le passage de couple ou l'absence de passage du couple au travers du mécanisme 1. Lors de la manoeuvre de l'embrayage, la course de la butée 4 peut donc être déterminée en mesurant le déplacement de l'extrémité supérieure 2a de la fourchette 2, directement ou indirectement, au moyen d'un potentiomètre ou d'un capteur linéaire de type quelconque (non représenté sur les schémas) associé à la tige 3a du vérin 3.

L'apprentissage proposé par l'invention s'effectue en immobilisant le véhicule, moteur tournant au ralenti et embrayage ouvert, après avoir engagé un rapport de la transmission. Le véhicule est donc à l'arrêt, les freins serrés, sans que l'accélérateur soit sollicité, la transmission étant de préférence sur le rapport le plus élevé de marche avant.

Au début de cet apprentissage, l'actionneur est au repos, de sorte que la distance de l'extrémité supérieure de la fourchette vis-à-vis du plan fixe mentionné ci-dessus, qui est représentative de la position de la butée, et donc de «l'état de l'embrayage», a la valeur xₒ indiquée sur la figure 1.

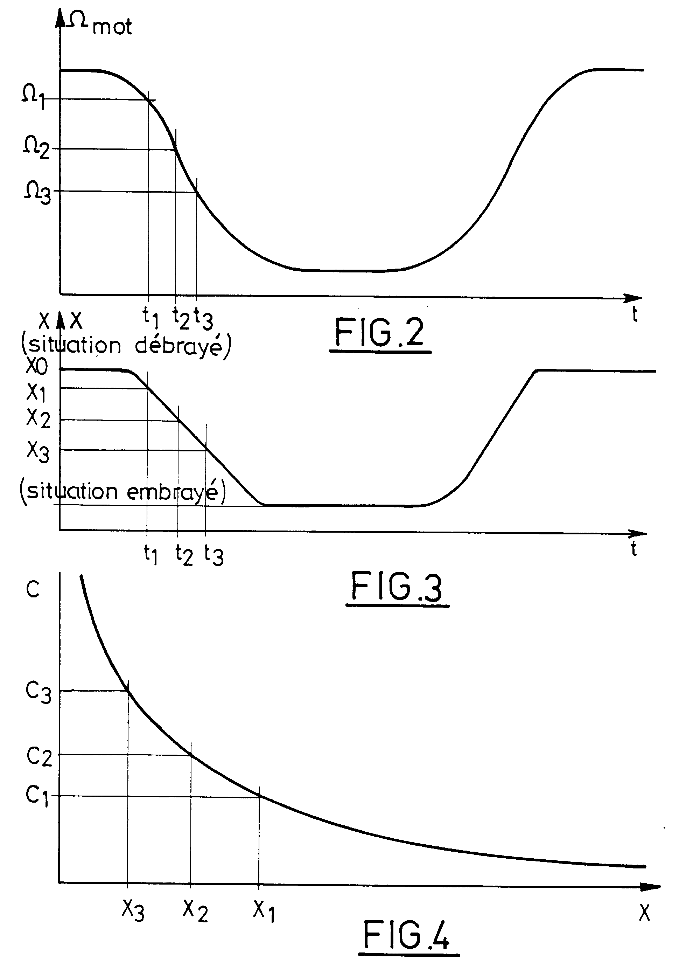

Conformément à l'invention, l'actionneur est alors déplacé à l'écart de sa position débrayée, en observant l'évolution du régime moteur, de façon à repérer les positions occupées par l'actionneur lors du passage du régime par des valeurs préétablies, correspondant notamment à des chutes de régime déterminées, à partir du ralenti. Comme indiqué sur les figures 1 à 4, on peut procéder à trois mesures de position x₁, x₂, x₃ de l'actionneur, lors du passage du régime par trois valeurs préétablies Ω₁, Ω₂, et Ω₃. Ces trois valeurs peuvent par exemple correspondre à des chutes de régime successives de 100 tours par minute à partir du ralenti. Sans sortir du cadre de l'invention, il est cependant possible d'opérer un nombre différent de mesures de position, ou de choisir d'autres valeurs de régime. La mise en oeuvre de l'invention suppose cependant de retenir au moins deux points de fonctionnement intermédiaires de l'embrayage entre le ralenti et le calage du moteur.

Conformément à l'invention, ces repérages de position de l'actionneur (et de la butée) en fonction du régime moteur sont accompagnés de la mesure du couple transmis dans chaque position, de manière à disposer de «points de fonctionnement» de l'embrayage, définis par une position de la butée et le couple transmis dans celle-ci.

On dispose ainsi d'au moins deux «points intermédiaires de fonctionnement», exploitables pour tracer une courbe de fonctionnement de l'embrayage, telle que celle qui est illustrée par la figure 4.

La précision de la courbe dépend bien entendu du nombre et de la répartition des points de fonctionnement à partir desquels elle est tracée. Son prolongement par ses deux extrémités jusqu'aux positions extrêmes de l'actionneur 3, permet de prévoir la valeur du couple transmis par l'embrayage dans toutes les positions de la butée 4. Enfin, sa pente donne une indication directe sur la progressivité de l'embrayage lors de sa fermeture.

En conclusion, l'invention permet de disposer d'informations directement exploitables pour établir la stratégie de fermeture d'un embrayage piloté lors du démarrage. La courbe de fonctionnement établie grâce à l'invention donne en effet une image précise du comportement mécanique d'un embrayage, et permet notamment d'adapter la loi de fermeture implantée dans un calculateur de pilotage, à la raideur propre de l'embrayage concerné. Cet apprentissage est particulièrement simple à mettre en oeuvre, et peut, si nécessaire, être reproduit au cours de la vie de l'embrayage, pour adapter les lois de commande du calculateur à l'état d'usure des garnitures.

## Revendications

1. Procédé d'apprentissage du fonctionnement d'un embrayage disposé entre un moteur de véhicule et une boîte de vitesses mécanique piloté comportant une butée (4) déplacée axialement sur un arbre d'embrayage (6) par un actionneur (3) placé sous le contrôle d'un calculateur, caractérisé en ce que :
- on immobilise le véhicule, moteur tournant au ralenti et embrayage ouvert, après avoir engagé un rapport de la transmission,
- on déplace l'actionneur (3) de sa position débrayée vers sa position embrayée en repérant ses positions lors du passage de régime moteur par des valeurs préétablies,
- on mesure le couple transmis dans chacune de ces positions de manière à disposer de points de fonctionnement de 1' embrayage définis par une position de la butée et par le couple transmis dans celle-ci.
- on adapte la loi de fermeture de l'embrayage implantée dans le calculateur à la courbe de fonctionnement établie à partir de ces points de fonctionnement.

2. Procédé d'apprentissage selon la revendication 1, caractérisé en ce que les valeurs de régime moteur préétablies correspondent à des chutes de régime déterminées à partir du ralenti.

3. Procédé d'apprentissage selon la revendication 1 ou 2, caractérisé en ce qu'on repère au moins deux positions intermédiaires de l'actionneur (3), précédant le calage du moteur.

4. Procédé d'apprentissage selon la revendication 1, 2 ou 3, caractérisé en ce qu'on prolonge la courbe de fonctionnement, jusqu'à la position embrayée, et la position débrayée de l'embrayage.
